Europäisches Patentamt

European Patent Office

Office européen des brevets

(11) Veröffentlichungsnummer: **0 007 021**
**A1**

(12) # EUROPÄISCHE PATENTANMELDUNG

(21) Anmeldenummer: 79102046.4

(22) Anmeldetag: 20.06.79

(51) Int. Cl.³: **B 61 H 5/00**
**B 61 C 9/44**

(30) Priorität: 19.07.78 DE 7821951 U

(43) Veröffentlichungstag der Anmeldung:
23.01.80 Patentblatt 80/2

(84) Benannte Vertragsstaaten:
BE DE FR GB IT NL

(71) Anmelder: SIEMENS AKTIENGESELLSCHAFT Berlin
und München
Postfach 261
D-8000 München 22(DE)

(72) Erfinder: Susdorf, Roman
Epensteinstrasse 15
D-1000 Berlin 51(DE)

(72) Erfinder: Rappenglück, Walter
Heinrich-Feller-Strasse 15
D-8080 Emmering Kv. Fürstenfeldbruck(DE)

(54) Antrieb eines schienengebundenen elektrischen Triebfahrzeuges.

(57) Bei einem Längsantrieb eines schienengebundenen elektrischen Triebfahrzeuges trägt die Getriebehohlwelle (5) die Bremsscheibe (11) und der Bremsantrieb und die Bremszangen (12) sind am Motor Getriebeaggregat (13) befestigt.

Zur Verbesserung der Laufeigenschaften des Antriebes ist die Getriebehohlwelle (5) mit der Treibachse (1) über eine Kardanhohlwelle (7) verbunden, die innerhalb der Getriebehohlwelle (5) liegt, die Treibachse (1) mit Spiel umgibt und mit dieser über Lenker (8) verbunden sind.

(Fig. 1)

EP 0 007 021 A1

SIEMENS AKTIENGESELLSCHAFT     Unser Zeichen

Berlin und München            VPA 78 G 3765 BRD

Antrieb eines schienengebundenen elektrischen Triebfahrzeuges

Die Neuerung betrifft einen Antrieb eines schienengebundenen elektrischen Triebfahrzeuges, bei dem der senkrecht zur Treibachse liegende Fahrmotor über Getriebe
die Treibachse antreibt, die über eine elastische Kupplung mit der Getriebehohlwelle verbunden ist, wobei diese
Getriebehohlwelle die Bremsscheibe trägt, während der
Bremsantrieb und die Bremszangen am Motor-Getriebeaggregat
befestigt sind. Ein derartiger Antrieb ist aus der
DE-OS 26 29 566 bekannt. Durch diese besondere Anordnung
der Bremsscheiben und des dazu gehörigen Bremsantriebs
mit den Bremsbacken wird erreicht, daß zwischen diesen
keine Relativbewegungen auftreten können, welche einen
erhöhten Verschleiß der Bremsscheiben zur Folge hätten.
Bei dem bekannten Antrieb mit der Bremsscheibe auf der
Getriebehohlwelle ist die Getriebehohlwelle mit einer
elastischen Kupplung, insbesondere einer Gummikupplung,
kraftschlüssig mit der Treibachse verbunden. Dies ergibt
eine verhältnismäßig steife Verbindung zwischen der Treib-

D 3 Win / 14.7.197

achse und der Getriebehohlwelle, so daß insbesondere hinsichtlich der Bewegungen in Querrichtung zwischen der Getriebehohlwelle und der Treibachse keine massenmäßige Entkopplung vorliegt. Für diese Bewegungen muß die verhältnismäßig große Masse der Bremsscheibe der Masse des Radsatzes mit Treibachse zugezählt werden, was die Laufeigenschaften des Antriebs verschlechtert, weil sich die ungefederten Massen erhöhen.

Der vorliegenden Neuerung liegt die Aufgabe zugrunde, die Laufeigenschaften eines derartigen Antriebs zu verbessern.

Zur Lösung dieser Aufgabe ist gemäß der Neuerung bei einem Antrieb der eingangs beschriebenen Art die Getriebehohlwelle mit der Treibachse über eine Kardanhohlwelle verbunden, die innerhalb der Getriebehohlwelle liegt, die Treibachse mit Spiel umgibt und mit dieser über Lenker verbunden ist. Eine derartige zwischengeschaltete Kardanhohlwelle mit verhältnismäßig großer Länge stellt eine weiche Verbindung zwischen der Getriebehohlwelle und der Treibachse dar, wobei noch zusätzlich durch die Anordnung der Lenker in der Verbindung zwischen der Kardanhohlwelle und der Treibachse eine massenmäßige Entkopplung erzielt wird, die auch das Gewicht der Kardanhohlwelle selbst mit einbezieht. Bei dieser Anordnung wirkt im Hinblick auf die Bewegungen in Querrichtung allein der Radsatz als ungefederte Masse, während sowohl die Getriebehohlwelle mit der Bremsscheibe als auch die Kardanhohlwelle als abgefederte Massen gelten. Dadurch werden die Laufeigenschaften aber verbessert, da die ungefederten primären Massen reduziert sind. Durch die neurungsgemäße Anordnung hat man also durch eine Verlagerung der Massen eine Verbesserung der Laufeigenschaften erzielt. Dies ist besonders vorteilhaft, weil eine entsprechende Verbesserung nicht durch eine Verringerung der Massen der Bremsscheiben möglich ist, da für diese im Hinblick auf ihre Wärmeabfuhreigenschaften eine gewisse Mindestmasse nicht unterschritten werden kann.

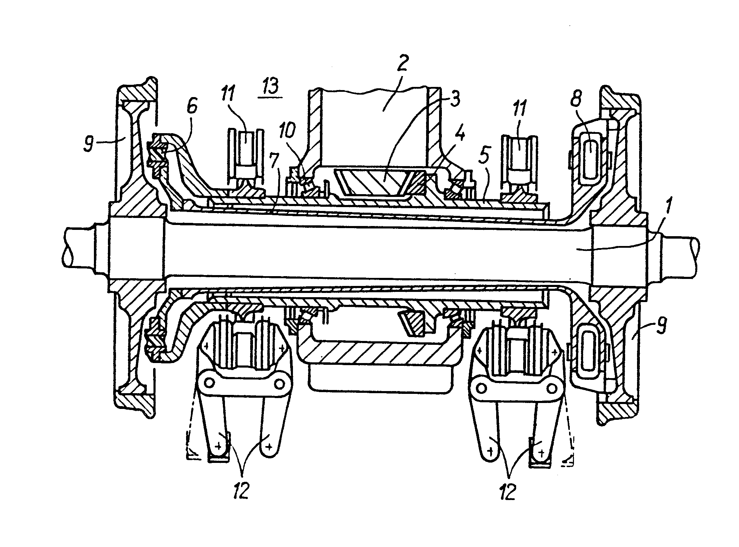

Es ist zwar aus dem DE-GM 1 962 052 (Fig. 2) bereits bekannt, bei einem Antrieb für ein schienengebundenes Triebfahrzeug mit einem senkrecht zur Treibachse liegenden elektrischen Fahrmotor als Verbindung zwischen der Getriebehohlwelle und der Treibachse eine Kardanhohlwelle vorzusehen, welche die Treibachse mit Spiel umgibt und innerhalb der Getriebehohlwelle angeordnet ist. Da es sich bei diesem bekannten Antrieb jedoch um einen Antrieb mit Gestellmotor handelt, bei dem also der elektrische Fahrmotor im Drehgestell fest gelagert ist, wird hier durch die besondere Anordnung der Kardanhohlwelle lediglich der Vorteil einer längeren Kardanhohlwelle mit besserer Auslenkbarkeit erzielt, aber nicht der Vorteil einer Massenentkopplung gegenüber den Bewegungen in Querrichtung, auch wenn, wie hier vorhanden, zwischen der Treibachse und der Kardanhohlwelle Lenker geschaltet sind.

Im folgenden sei die Neuerung anhand des in der Figur schematisch dargestellten Ausführungsbeispiels noch näher erläutert. Die Figur zeigt einen Längsschnitt durch die Treibachse und Teile des Antriebs.

Ein schienengebundenes elektrisches Triebfahrzeug wird durch einen senkrecht zur Treibachse 1 angeordneten elektrischen Fahrmotor 2 über ein Kegelradgetriebe 3 angetrieben, dessen Großrad 4 auf einer die Treibachse 1 mit Spiel umgebenden Getriebehohlwelle 5 gelagert ist. Die Getriebehohlwelle 5 ist ihrerseits über eine Gummiringfeder 6 mit der einen Seite einer Kardanhohlwelle 7 verbunden, die innerhalb der Getriebehohlwelle 5 liegt und die Treibachse 1 ebenfalls mit Spiel umgibt. Die andere Seite der Kardanhohlwelle 7 ist über Lenker 8 mit der Treibachse 1 verbunden. Eine derartige Kardanhohlwelle 7 hat den Vorteil, daß ihre Länge den gesamten Raum zwischen den Treibrädern 9 ausnutzen kann, so daß sie eine verhältnismäßig große Winkelbeweglichkeit aufweist.

Auf der Getriebehohlwelle 5, auf der über Lager 10 sowohl das Getriebegehäuse als auch der Ständer des elektrischen Fahrmotors 2 gelagert ist, sind außerdem noch auf beiden Seiten des Getriebes 3 je eine Bremsscheibe 11 angeordnet. Die zur Bremsscheibe 11 gehörigen Bremsbacken 12 und der nicht dargestellte Bremsantrieb sind jeweils in nicht dargestellter Weise mit dem Motor/Getriebeaggregat 13 verbunden. Dadurch treten zwischen den Bremsscheiben 11 und den Bremsbacken 12 keinerlei Relativbewegungen auf. Der Verschleiß der Bremsscheibe 11 wird somit klein gehalten. Die Masse der Bremsscheibe 11, die aus Gründen der Wärmeabfuhr nicht ein bestimmtes Mindestmaß unterschreiten kann, ist durch die besondere Anordnung auf der Getriebehohlwelle 5 und der Zwischenschaltung der Kardanhohlwelle 7 und ihrer Verbindung zur Treibachse über Lenker 8 im Hinblick auf Bewegungen in Querrichtung von der Treibachse 1 und den mit dieser verbundenen Treibrädern 9 entkoppelt, da das Motor/Getriebeaggregat 13 sich allein auf der Getriebehohlwelle 5 abstützt. Die Masse der Bremsscheiben 11 ist also für Bewegungen in Querrichtung den gefederten Massen zuzurechnen, wodurch sich gute Laufeigenschaften ergeben.

Die durch die Neuerung erzielten Vorteile sind unabhängig davon, ob der elektrische Fahrmotor 2 jeweils nur eine Treibachse 1 einseitig antreibt, oder ob er beidseitig zwei Treibachsen gleichzeitig antreibt.

2 Schutzansprüche
1 Figur

- 1 -    VPA 78 G 3765 BRD

Schutzansprüche

1. Antrieb eines schienengebundenen elektrischen Triebfahrzeuges, bei dem der senkrecht zur Treibachse liegende
elektrische Fahrmotor über Getriebe die Treibachse antreibt, die über eine elastische Kupplung mit der Getriebehohlwelle verbunden ist, wobei diese Getriebehohlwelle
die Bremsscheibe trägt, während der Bremsantrieb und die
Bremszangen am Motor/Getriebeaggregat befestigt sind,
d a d u r c h .  g e k e n n z e i c h n e t ,  daß die
Getriebehohlwelle (5) mit der Treibachse (1) über eine
Kardanhohlwelle (7) verbunden ist, die innerhalb der Getriebehohlwelle (5) liegt, die Treibachse (1) mit Spiel
umgibt und mit dieser über Lenker (8) verbunden ist.

2. Antrieb nach Anspruch 1,  d a d u r c h  g e k e n n -
z e i c h n e t ,   daß auf der Getriebehohlwelle (5)
auf jeder Seite des Getriebes (3) eine Bremsscheibe (11)
angeordnet ist.

VPA 78 G 3765

Europäisches Patentamt

EUROPÄISCHER RECHERCHENBERICHT

Nummer der Anmeldung

EP 79 102 046.4

# EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE – U – 1 921 565 (KRAUSS-MAFFEI)  <br> * ganzes Dokument *  <br> -- | 2 |
| X | CH – A – 499 418 (BROWN, BOVERI & CIE)  <br> * ganzes Dokument *  <br> -- | 1 |
|  | DE – C – 689 804 (BROWN, BOVERI & CIE)  <br> * ganzes Dokument *  <br> -- | 1 |
|  | DE – C – 376 877 (BROWN, BOVERI & CIE)  <br> * ganzes Dokument *  <br> -- | 1 |
| A,D | DE– U – 1 962 052 (BROWN, BOVERI & CIE)  <br> -- |  |
| D | DE – A – 2 629 566 (WAGGONFABRIK UERDINGEN)  <br> ---- |  |

**KLASSIFIKATION DER ANMELDUNG (Int.Cl.³)**

B 61 H    5/00

B 61 C    9/44

**RECHERCHIERTE SACHGEBIETE (Int. Cl.³)**

B 61 C    9/00

B 61 H    5/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 22-08-1979 | LUDWIG |

EPA form 1503.1   06.78